# EUROPEAN PATENT APPLICATION

(11) **EP 2 222 087 A1**
(43) Date of publication of application: **25.08.2010**
(21) Application number: 09305158.9
(22) Date of filing: 19.02.2009
(51) Int. Cl.: H04N 7/26

(54) **Bit depth upscaling in RGB colour space for reducing propagation of errors due to transformation to YUV colour space**

(71) Applicant: Thomson Licensing, 92130 Issy-les-Moulineaux (FR)
(72) Inventor: Wu, Yuwen, Beijing Beijing 100031 (CN)
(74) Representative: Hartnack, Wolfgang

(57) **Abstract**

The invention proposes a method for encoding an RGB representation, said RGB representation having an initial bit depth and being a red-green-blue colour space representation of a colour image in red-green-blue colour space, said method comprises the steps of determining an RGB representation of increased bit depth by increasing the RGB representation's initial bit depth, transforming the RGB representation of increased bit depth into a YUV representation, said YUV representation having said increased bit depth and being a luminance-chrominance colour space representation of the colour image in luminance-chrominance colour space, and encoding said YUV representation.

By increasing the bit depth, information is transferred to higher bit planes which are affected less by error propagation than lower bit planes. In addition, the transfer of information to higher bit planes enables the use of a coarser quantization by which additional bit rate requirements introduced by bit depth increase is compensated.

## Description

### Background

The invention is related to encoding an RGB representation, said RGB representation having an initial bit depth and being a red-green-blue colour space representation of a colour image in red-green-blue colour space.

Digital image sensing devices such as digital still cameras, digital video cameras, also known as camcorders, or scanners commonly produce RGB representations of colour images captured.

Such RGB representations comprise separate colour component bit maps or images for base colours red, green and blue. Each of the colour component bit maps not only carries the colour information of the respective colour but also a reasonable portion of information regarding the overall brightness of the colour image.

For instance, even a black-and-white image representation in RGB colour space has to consist of three colour component bit maps.

A way of efficient encoding comprises separating brightness information such that it is comprised in only a single bit map. This may be achieved by a transformation of the RGB representation into a YUV representation, for instance a Recommendation ITU-R BT.709 based transformation. In YUV colour space, the colour image is represented by a luma bit map representing luminance information or brightness information comprised in the colour image and two chroma bit maps representing the chrominance information or colour difference information comprised in the colour image.

As the chroma bit maps mainly carry additional information helping for enrichment of the brightness information which is the information crucial for understanding the image content, YUV representations are much better compressible. That is, YUV representations allow for even heavy subsampling of chroma bitmaps without significantly impairing a user's ability to understand the image. Further much coarser quantization may be used for the chroma bit maps.

While ability for resolving colour depth and spatial depth of capturing devices as well as displaying devices is constantly increasing, there is still a need for efficient encoding since at least in some application limited transmission capabilities impose a severe constraint.

Therefore, even in high quality applications RGB representations are transformed into YUV representations prior to encoding.

Disadvantageously, transformation from RGB to YUV and back is such that errors artificially introduced by transformation and encoding, for instance due to quantization, are propagated and amplified. This may be acceptable for low resolution or low quality applications such as reproduction on tiny displays but easily becomes annoying for high spatial and/or colour depth resolution, for instance for HDTV applications.

### Invention

The invention proposes a method for encoding an RGB representations allowing for efficient encoding but attenuating the effects of error propagation due to transformation wherein said RGB representation has an initial bit depth, said RGB representation is a red-green-blue colour space representation of a colour image in red-green-blue colour space and said method comprises the features of claim 1.

Said method comprises the steps of determining an RGB representation of increased bit depth by increasing the RGB representation's initial bit depth, transforming the RGB representation of increased bit depth into a YUV representation, said YUV representation having said increased bit depth and being a luminance-chrominance colour space representation of the colour image in luminance-chrominance colour space, and encoding said YUV representation.

By increasing the bit depth, information is transferred to higher bit planes which are affected less by error propagation than lower bit planes. In addition, the transfer of information to higher bit planes enables the use of a coarser quantization by which additional bit rate requirements introduced by bit depth increase is compensated.

The invention further proposes a correspond method for decoding, said decoding method comprising the features of claim 6.

Advantageous embodiments of the methods are described in the respective dependent claims.

### Drawings

Exemplary embodiments of the invention are illustrated in the drawings and are explained in more detail in the following description.

### In the figures:

- Fig. 1: depicts an exemplary embodiment of the proposed encoding method and
- Fig. 2: depicts an exemplary embodiment of the proposed decoding method.

### Exemplary embodiments

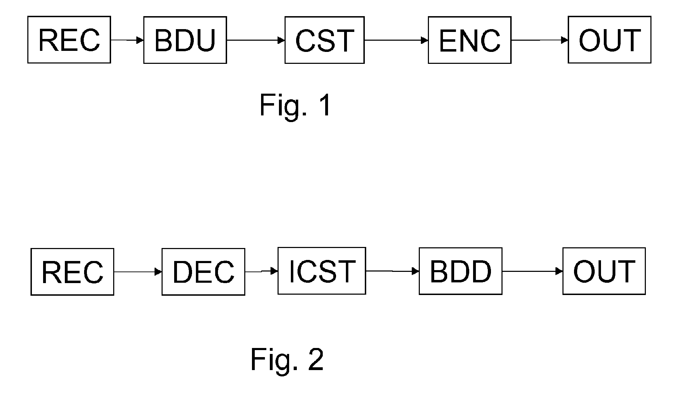

Fig. 1 depicts an exemplary embodiment of the proposed encoding method. The method commences with reception of an RGB representation of a colour image in step REC. The RGB representation consists of a set of three colour images or colour bit maps wherein one of the colour bit maps represent a first colour component, e.g. red, another one of the colour bit maps represent a second colour component, e.g. green, and yet another one of the colour bit maps represent a third colour component, e.g. blue.

Each of the bit maps comprises a binary encoded value for each pixel of the colour image wherein each of said binary encoded values comprises a fixed first number of bits, e.g. ten bits.

In a next step BDU, the bit depth of said binary encoded values is up-scaled or increased. That is the value is represented using a larger second number of bits, e.g. twelve bits. Further, the value is represented differently.

For instance, bit depth up-sampling may comprise left shifting bits of the binary codes, e.g. by two bits. Thus, instead of a binary code of given value which was encoded before left shift, another binary code of another value four times as large as the given value is generated.

Bit depth up-sampling needs not to be linear. For instance, bit depth may be doubled and binary codes of squares of the values encoded before may be carried by resulting bit words of twice the length.

Bit depth increase in step BDU is applied to all the binary encoded values in each of the colour component bit maps equally.

After bit depth increase, step CST is performed in which the up-sampled RGB representation is transformed into a YUV representation. Said transformation may be compliant to Recommendation ITU-R BT.709, for instance, but other invertible transformations are possible.

The YUV representation consists of a set of one luminance image or bit map and two chrominance or colour difference images or bit maps wherein one of the colour difference bit maps represent a first colour difference component, and the other one of the two colour difference bit maps represent a second colour difference.

The luminance bit maps as well as each of the chrominance bit maps comprises a binary encoded value for each pixel of the colour image wherein each of said binary encoded values comprises said larger second number of bits, e.g. twelve bits.

Then, said YUV representation is encoded using an AVC HIGH Profile 444 compliant MPEG encoding method, for instance, but other encoders are possible. Quantization parameter of encoding may be adjusted in accordance to transmission bandwidth requirements or other constraints.

Finally, the encoding result is outputted in step OUT, e.g. for storage or transmission.

Fig. 2 depicts an exemplary embodiment of the proposed decoding method. The decoding starts with reception of an encoded data in step REC. Then in step DEC, YUV representation is decoded from the received encoded data wherein a decoder corresponding to the encoder used for encoding need to be used, for instance by an AVC HIGH Profile 444 compliant MPEG decoding.

The decoded YUV representation is subject to an inverse colour space transform in step ICST in which the YUV representation is transformed into RGB representation. Thus, if a Recommendation ITU-R BT.709 based transformation was used at encoder side, the corresponding inverse transformation need to be used at decoder side.

Finally, bit depth of the resulting RGB representation is down-sampled in step BDD ere to outputting the RGB representation of down sampled bit depth is outputted in step OUT. Bit depth down-sampling has to correspond to bit depth up-sampling at encoder side, for instance bits may be right shifted by two bits if two bit left shift was used for increasing bit depth prior to encoding.

The exemplary embodiments only serve for illustrating of the invention, and shall by no means be construed as limiting scope or spirit of the claims which solely define for what protection is sought.

## Claims

1. Method for encoding an RGB representation, said RGB representation having an initial bit depth and being a red-green-blue colour space representation of a colour image in red-green-blue colour space, said method comprises the steps of
- determining an RGB representation of increased bit depth by increasing the RGB representation's initial bit depth,
- transforming the RGB representation of increased bit depth into a YUV representation, said YUV representation having said increased bit depth and being a luminance-chrominance colour space representation of the colour image in luminance-chrominance colour space, and
- encoding said YUV representation.

2. Method according to claim 1, wherein each pixel of said RGB representation comprises a binary value of a red colour component, a further binary value of a green colour component and a yet further binary value of a blue colour component and wherein the initial bit depth is increased by left shifting bits of all binary values of each pixel.

3. Method according to claim 1, wherein said colour image is comprised in a colour video image sequence and encoding is compliant with high444 profile of MPEG4 advanced video codec.

4. Method according to claim 1, 2 or 3, wherein transforming is compliant to Recommendation ITU-R BT.709.

5. Method for decoding an RGB representation, said RGB representation being a red-green-blue colour space representation of a colour image in red-green-blue colour space, said method comprises the steps of
- decoding an YUV representation, said YUV representation having a given bit depth and being a luminance-chrominance colour space representation of the colour image in luminance-chrominance colour space,
- transforming the YUV representation into an RGB representation of said given bit depth, and
- decreasing the given bit depth of the RGB image of given bit depth.

6. Method according to claim 5, wherein each pixel of said RGB representation of the given bit depth comprises a binary value of a red colour component, a further binary value of a green colour component and a yet further binary value of a blue colour component and wherein the given bit depth is decreased by right shifting bits of all binary values of each pixel.

7. Method according to claim 5, wherein said YUV representation is decoded from a high444 profile of MPEG4-advanced video codec compliant encoded image data stream.

8. Method according to claim 5, wherein transforming is compliant to Recommendation ITU-R BT.709.
